# EUROPEAN PATENT APPLICATION

(11) **EP 4 349 787 A1**
(43) Date of publication of application: **10.04.2024**
(21) Application number: 22811153.0
(22) Date of filing: 10.05.2022
(51) Int. Cl.: C01G 41/00, B01J 23/30, B01J 35/02, B01J 37/08, B01J 37/34

(54) **MULTICOMPONENT SYSTEM COMPLEX OXIDE POWDER, ELECTROCHEMICAL DEVICE AND CATALYST USING SAME, AND MULTICOMPONENT SYSTEM COMPLEX OXIDE POWDER PRODUCTION METHOD**

(30) Priority: 25.05.2021 JP 2021087628
(71) Applicant: Toshiba Materials Co., Ltd., Isogo-Ku Yokohama-Shi Kanagawa 235-0032 (JP)
(72) Inventor: FUKUSHI, Daisuke, Yokohama-shi, Kanagawa 235-0032 (JP); SUENAGA, Seiichi, Yokohama-shi, Kanagawa 235-0032 (JP); SASAKI, Akito, Yokohama-shi, Kanagawa 235-0032 (JP); TOYOSHIMA, Masaki, Yokohama-shi, Kanagawa 235-0032 (JP)
(74) Representative: Henkel & Partner mbB
(86) International application number: PCT/JP2022/019844
(87) International publication number: WO 2022/249880

(57) **Abstract**

The purpose of the present invention is to provide: a multicomponent system complex oxide powder that has high thermal stability, high capacity, high reversible reaction speed of the electrochromic property thereof, and a high catalyst activity; an electrochemical device and a catalyst using the powder; and a method for producing the multicomponent system complex oxide powder. The present invention provides a multicomponent system complex oxide powder that includes oxide particles containing a complex oxide that includes oxygen and compositional metal elements including, at a content proportion of a total of 80 atm% or more, two or more types of hexavalent metal elements and two or more types of pentavalent metal elements. The oxide particles each have a major axis and a minor axis that intersects with the major axis, and each have a polygonal tunnel structure including at least one tunnel that has a shape of a polygon having five or more sides and that is along the major axis.

## Description

### FIELD

Embodiments described herein generally relate to a multielement composite oxide powder, an electrochemical device and catalyst using the same, and a multielement composite oxide powder production method.

### BACKGROUND

Metal oxides and metal composite oxides are known to be used as electrochemically functional materials for electrochemical devices, catalysts, and the like. Examples of electrochemical devices include electric storage devices and electrochromic devices.

Electric storage devices are devices capable of charge and discharge, and have been developed as a part of efficient use of electricity. Various electric storage devices such as secondary batteries, capacitors, and electric double-layer capacitors have been developed.

Electrochromic devices are devices which utilize a reversible change in photophysical properties upon applying electric charge to a substance. Electrochromic devices are used for displays or light-modulating systems, making use of the capability to alter photophysical properties. Examples of light-modulating systems include light-modulating glass, light-modulating eyeglasses, and antidazzle mirrors. Light-modulating systems are used in various fields such as vehicles, aircrafts, and buildings.

Examples of electrochemically functional materials used in electric storage devices and electrochromic devices include tungsten oxide powder and molybdenum oxide powder. As means for improving the storage capacity and charge/discharge efficiency of a material applied to the electric storage device, imparting of hopping conductivity to the material has been attempted. In addition, the imparting of hopping material to the material has been attempted also as means for improving the rate of a reversible reaction when an electric charge is applied to a material exhibiting electrochromism. The hopping conductivity can be provided by, for example, providing an oxide with oxygen deficiency or defects due to impurity doping.

Metal oxides and metal composite oxides are used in various applications as catalysts. For example, as a method for producing unsaturated carboxylic acids such as acrylic acid and methacrylic acid which are industrially used as raw materials for various synthetic resins, paints, plasticizers and the like, there is known a method in which an alkane such as propane or isobutane is subjected to a gas-phase contact oxidation reaction in the presence of a catalyst containing a metal composite oxide containing molybdenum (Mo), vanadium (V), tellurium (Te) and other metals (e.g., niobium (Nb)). In addition, it is known that by using a catalyst containing a metal composite oxide that contains Mo, V, and antimony (Sb) as essential components, ethylene, which is industrially used as a basic raw material for various petrochemical products and polymer products, can be selectively produced from ethane by oxidative dehydrogenation reaction at a relatively low temperature.

### CITATION LIST

### PATENT LITERATURE

Patent Literature 1: Jpn. Pat. Appln. KOKAI Publication No. H6-279351
Patent Literature 2: Jpn. Pat. Appln. KOKAI Publication No. H9-194213
Patent Literature 3: Jpn. Pat. Appln. KOKAI Publication No. H10-175885
Patent Literature 4: Jpn. Pat. Appln. KOKAI Publication No. 2005-138008
Patent Literature 5: Jpn. Pat. Appln. KOKAI Publication No. 2010-111575
Patent Literature 6: Jpn. Pat. Appln. KOKAI Publication No. 2011-108554
Patent Literature 7: International Publication No. WO 2011/108472
Patent Literature 8: International Publication No. WO 2016/039157
Patent Literature 9: International Publication No. WO 2018/199020
Patent Literature 10: International Publication No. WO 2019/163931
Patent Literature 11: International Publication No. WO 2019/208364
Patent Literature 12: International Publication No. WO 2020/196720

### SUMMARY

### TECHNICAL PROBLEM

An object of an embodiment is to provide a multielement composite oxide powder having a high thermal stability, a high capacity, a high reversible reaction rate of electrochromism, and a high catalytic ability, an electrochemical device and a catalyst using the same, and a method for producing the multielement composite oxide powder.

### SOLUTION TO PROBLEM

According to one embodiment, there is provided a multielement composite oxide powder that includes an oxide particle including a composite oxide, the composite oxide containing: constituent metal elements containing two or more hexavalent metal elements and two or more pentavalent metal elements at a content of 80 atm% or more in total; and oxygen. The oxide particle has a major axis and a minor axis intersecting the major axis, and has a polygonal tunnel structure including one or more polygonal tunnels of five or more vertices in a major axis direction along the major axis.

### BRIEF DESCRIPTION OF THE DRAWINGS

FIG. 1 is a schematic perspective view representing an example of a multielement composite oxide powder according to an embodiment.
FIG. 2 is an enlarged conceptual diagram representing section L shown in FIG. 1.
FIG. 3 is an enlarged conceptual diagram representing an example of section S shown in FIG. 1.
FIG. 4 is an enlarged conceptual diagram representing another example of section S shown in FIG. 1.
FIG. 5 is a conceptual diagram showing an example of a structure of an electrochemical device according to the embodiment.
FIG. 6 is a conceptual diagram showing another example of the structure of the electrochemical device according to the embodiment.

### DETAILED DESCRIPTION

Electrical conductivity and active sites are known to change in WO₃ and MoOs, which are oxides of W and Mo, when they are changed to have a crystal structure having a tunnel structure or a layered structure within the crystal, through reduction by, for example, introducing oxygen deficiency. However, oxides obtained by reduction, such as WO_{2.72}, W₅O₁₄ and Mo₅O₁₄, have an unstable crystal structure, and production of particles having a stable structure has been difficult. Obtaining of a crystal structure having a tunnel structure or a layered structure without performing reduction by compositing Mo⁶⁺ with W⁶⁺ or V⁵⁺ has also been studied. However, when one element is combined with Mo, for example, W can be solid-solubilized only up to 30 atm% and V can be solid-solubilized only up to 10 atm%. This is because the crystal structure does not stabilize if W is solid-solubilized in an amount of 30 atm% or more and V is dissolved in an amount of 10 atm% or more.

### [Multielement Composite Oxide Powder]

The multielement composite oxide powder according to the embodiment is an oxide particle containing constituent metal elements and oxygen. The constituent metal elements contain two or more hexavalent metal elements and two or more pentavalent metal elements at a content of 80 atm% or more in total. The shape of the oxide particle has a major axis and a minor axis, and the oxide particle has a polygonal tunnel structure within its crystal structure. The major axis and the minor axis intersect. The polygonal tunnel structure includes one or more polygonal tunnels of five or more vertices. The polygonal tunnels unceasingly lie along a major axis direction, which lies along the major axis.

The multielement composite oxide powder contains particles of a composite oxide that has, in addition to hexavalent metal elements such as W⁶⁺ and Mo⁶⁺, two or more metals of another valence composited thereto. The term "composited" refers to a state of being mixed-in at an atomic level and being incorporated into the crystal. Therefore, the composite should be distinguished from a mixed powder obtained by simply mixing hexavalent metal oxides and pentavalent metal oxides. The pentavalent metal oxides should similarly be distinguished from metal oxides which are present as unavoidable impurities, as well.

A composite oxide having a tunnel structure with a stabilized crystal structure is provided by having two or more each of metals having different valences. That is, the composite oxide includes two or more of hexavalent metals and two or more of pentavalent metals.

Since the oxide particle has a polygonal tunnel along its major axis, the multielement composite oxide powder can exhibit satisfactory performance as an electrochemically functional material when applied to an electrochemical device. Specifically, by virtue of having the tunnel structure, the electric storage device can exhibit high capacity and can be charged and discharged at high rate. Further, in an electrochromic device, since the ion diffusion rate is increased by the tunnel structure, the response time of the electrochromic device can be improved. In addition, since the crystal structure is stabilized, the catalytic ability is improved. Furthermore, the multielement composite oxide powder can have a low volume resistivity and can exhibit excellent electric conductivity. Moreover, since the composite oxide has a high melting point, it also has high thermal stability.

Hereinafter, the multielement composite oxide powder according to the embodiment may be simply referred to as "composite oxide powder". That is, the term "composite oxide powder" refers to the multielement composite oxide powder, herein.

The multielement composite oxide powder contains particles of the composite oxide containing two or more hexavalent metal elements, two or more pentavalent metal elements, and oxygen. Among the constituent metal elements contained in the composite oxide, the proportion occupied by the two or more hexavalent metal elements and the two or more pentavalent metal elements is 80 atm% or more. The constituent metal elements preferably contain hexavalent metal elements and pentavalent metal elements in a total proportion of 90 atm% or more.

The valence of the metal element contained as a constituent metal element in the composite oxide refers to a valence in a state where the composite oxide maintains charge neutrality. For example, the composite oxide in an oxidized state may be in a state where charge neutrality is maintained. In addition, the composite oxide applied as the electrochemically functional material of the electric storage device may be in a state of maintaining charge neutrality if the electric storage device is in a discharged state.

The hexavalent metal elements include, for example, two or more selected from the group consisting of W, Mo, Cr, Re, and Mn. The composite oxide desirably includes at least W and Mo as the hexavalent metal element. In one preferred aspect, the constituent metal elements contain hexavalent metal elements in a total proportion of 40 atm% or more and 90 atm% or less. In a more preferred aspect, the hexavalent metal elements are contained at a total proportion of 60 atm% or more and 90 atm% or less.

The valence of the constituent metal elements can be measured by X-ray photoelectron spectroscopy (XPS) analysis. The valence can be determined from a peak unique to each element obtained by the XPS analysis, according to chemical shift.

For example, Ti can be determined to be Ti⁴⁺ from the peak of Ti2p_{3/2} being at 459 eV due to chemical shift. V can be determined to be V⁵⁺ from the peak of V2p_{3/2} being at 518 eV. Ta can be determined to be Ta⁵⁺ from the peak of Ta4f_{7/2} being at 26 eV. W can be determined to be W⁶⁺ from the peak of W4f_{7/2} being at 36 eV. The measurement conditions of the XPS analysis are as follows: excitation X-ray: Al Kα 1,2 line (1486.6 eV), X-ray diameter: 200 um, and photoelectron detection angle: 45°.

The hexavalent metal elements of the constituent metal elements may consist only of W and Mo. In a desirable aspect, at least W and Mo are contained as the hexavalent metal elements. The ratio A_{W}/A_{Mo} of the W element content A_{w} to the Mo element content A_{Mo} is preferably 0.5 ≤ A_{W}/A_{Mo} ≤ 2.5. In a case where the content ratio of W to Mo is within this range, the capacity, electrochromic response time, and catalytic performance of the composite oxide powder are improved. The unit of the Mo element content A_{Mo} and the W element content A_{W} is atm%.

The pentavalent metal elements include, for example, two or more selected from the group consisting of Ta, Nb, and V. In one preferred aspect, the constituent metal elements contain the pentavalent metal elements at a content of 9 atm% or more and 40 atm% or less. In a more preferred aspect, the pentavalent metal elements are contained at a content ratio of 10 atm% or more and 40 atm% or less. The inclusion of the pentavalent metal elements contributes to the high discharge capacity of the composite oxide. In addition, the inclusion of the pentavalent metal elements improves the oxidizing power of the composite oxide. Therefore, the composite oxide can perform a high catalytic action for the oxidation-reduction reaction.

The constituent metal elements of the multielement composite oxide may further contain one or more tetravalent metal elements at a proportion of 1 atm% or more. In a case where the tetravalent metal element is contained, the content thereof is preferably 3 atm% or more. The tetravalent metal elements include elements of the 4A group in the periodic table, and are, for example, one or more selected from the group consisting of Ti, Zr, and Hf. If the constituent metal elements include the tetravalent metal element, among the tetravalent metal elements, at least Ti is desirably included. This is because among Ti, Zr, and Hf, the source material for Ti, such as TiO₂, is inexpensive. The upper limit of the content of the tetravalent metal elements is 20 atm% or less.

The composite oxide includes one or more polygonal tunnels in its crystal structure. The oxide particle of the composite oxide has a major axis and a minor axis intersecting the major axis, and the polygonal tunnels extend in a major axis direction along the major axis. The term "one or more polygonal tunnels" as used herein refers to those of polygons having five or more vertices, such as a pentagon and a hexagon. The composite oxide may include tetragonal tunnels. The inclusion of the polygonal tunnels having five or more vertices improves the extraction rate of charge carrier ions accompanying charging and discharging of a storage battery and the diffusion rate of ions accompanying reversible reaction in an electrochromic device. Therefore, the composite oxide powder containing the oxide particles having such a polygonal tunnel structure can be suitably applied to an electrochemical device as an electrochemically functional material. The polygonal tunnel having a polygonal shape with seven or more vertices may be present, but the oxide particle preferably has tunnels of a pentagonal shape or a hexagonal shape.

The oxide particle desirably includes 20 or more and 70 or less polygonal tunnels having five or more vertices per 5 nm × 5 nm area in a region not including a peripheral portion of 1 nm width from the outer periphery of a plane intersecting the major axis direction. The aforementioned plane may be, for example, one end face along the major axis of the oxide particle or a cross-section of the oxide particle. By having, as such, 20 or more and 70 or less polygonal tunnels having five or more vertices included per 25 nm² in the main region of the oxide particle excluding the peripheral portion, satisfactory electrical conductivity and ionic conductivity can be exhibited and the crystal structure can be kept stable. It should be noted that an amorphous phase may be formed in the peripheral portion corresponding to an approximately 1 nm surface layer of the oxide particle.

Approximately 10 to 50 tetragonal tunnels may be included per 5 nm × 5 nm area described above. If the number of tetragonal tunnels is 50 or less per 25 nm² in the main region, the crystal structure can be kept stable.

With no tetragonal tunnel present, there is a possibility that the ionic conductivity may be reduced. Therefore, in order to achieve both conductivity and stabilization of the crystal structure, 20 or more and 70 or less polygonal tunnels having five or more vertices are desirably present per 25 nm², and 10 or more and 50 or less tetragonal tunnels are preferably present.

The composite oxide may include, for example, a particle having a high aspect ratio, such as one of an acicular shape, and a layered structure within the crystal structure thereof, as well. In the layered structure as referred to herein, a plurality of layers each containing a metal element are arranged at intervals of 0.3 nm or more and 0.5 nm or less in the major axis direction (which may correspond to, for example, a c-axis direction of the crystal structure) of an acicular oxide particle. Each layer intersects the major axis direction. In other words, a plurality of layers are stacked along the direction in which the polygonal tunnel extends, and such a layered structure forms a columnar crystal structure. Since the composite oxide has a layered structure within the columnar crystal structure grown in the major axis direction, the composite oxide can exhibit properties as an electrochemically functional material. In a composite oxide of a layered structure having many layers in the crystal structure, a large amount of carrier ions such as Li ions can be taken in between the layers (so-called intercalation), and the carrier ions can be reversibly taken in and out. Therefore, the composite oxide can be used for a storage battery having a large discharge capacity or an electrochromic device having high stability.

In such a composite oxide powder, the composite oxide desirably has little oxygen deficiency or other site deficiencies. Theoretically, the composite oxide is desirably free of deficiency. With little oxygen deficiency and other site deficiencies, a stable crystal structure can be maintained. The "oxygen deficiency" indicates a state in which, within a crystal lattice forming the composite oxide, a part of the oxygen atoms that compose the crystal lattice is not present. A state where a part of an element other than oxygen that compose the crystal structure, for example, the constituent metal elements, is not present at the site of that element within the crystal structure corresponds to the site deficiency for that element.

The oxide particles may have an aspect ratio of 2 or more and 50 or less. The term "aspect ratio" as used herein refers to the ratio of the major axis to the minor axis of an oxide particle (aspect ratio = major axis/minor axis). The oxide particle having an aspect ratio in the above range may have a shape such as an acicular shape, a columnar shape, or a rod shape.

According to a preferred aspect, the composite oxide has a composition represented by the general formula WₐMo_{b}AₓTi_{y}O_{z}. In the general formula, A is two or more selected from the group consisting of V, Ta, and Nb. Each subscript in the formula satisfies 0.5 ≤ a/b ≤ 2.5, 0.4 ≤ a+b ≤ 0.9, 0.09 ≤ x ≤ 0.6, 0 ≤ y ≤ 0.3, 2 ≤ z ≤ 3, and a+b+x+y = 1. More preferably, each subscript satisfies 0.5 ≤ a/b ≤ 2.5, 0.6 ≤ a+b ≤ 0.9, 0.1 ≤ x ≤ 0.4, 0 ≤ y ≤ 0.2, 2 ≤ z ≤ 3, and a+b+x+y = 1. More preferably, the subscript y is 0.1 or less (y ≤ 0.1). Further, the subscript y may be 0.03 or more (0.03 ≤ y).

According to a specific example of the above aspect, the composite oxide is represented by the following general formula I:

WₐMO_{b}A_{c}O_{z} ··· I.

In the general formula I, A is two or more selected from the group consisting of V, Ta, and Nb. Each subscript in the formula satisfies 0.5 ≤ a/b ≤ 2.5, 0.4 ≤ a+b ≤ 0.9, 0.1 ≤ c ≤ 0.6, 2 ≤ z ≤ 3, and a+b+c = 1. More preferably, each subscript satisfies 0.5 ≤ a/b ≤ 2.5, 0.6 ≤ a+b ≤ 0.9, 0.1 ≤ c ≤ 0.4, 2 ≤ z ≤ 3, and a+b+c = 1.

According to another example of the above aspect, the composite oxide is represented by the following general formula II:

WₐMo_{b}AₑTi_{f}O_{z} ··· II.

In the general formula II, A is two or more selected from the group consisting of V, Ta, and Nb. Each subscript in the formula satisfies 0.5 ≤ a/b ≤ 2.5, 0.4 ≤ a+b ≤ 0.9, 0.09 ≤ e ≤ 0.4, 0.01 ≤ f ≤ 0.3, 2 ≤ z ≤ 3, and a+b+e+f = 1. More preferably, the sum of the subscripts a and b satisfies 0.6 ≤ a+b ≤ 0.9. More preferably, the subscript f is 0.1 or less (f ≤ 0.1). The subscript f may be 0.03 or more (0.03 ≤ f) .

The subscripts a, b, c, e, f, x, y, and z in each general formula represent atomic ratios. In addition, inevitable impurities may be contained in an atomic ratio of less than 0.01.

The aspects described above, in which the composite oxide is represented by the aforementioned general formulae, are examples of a desirable aspect in which the hexavalent metal element consists only of W and Mo and the content ratio of W and Mo satisfies 0.5 ≤ A_{W}/A_{Mo} ≤ 2.5. The specific examples represented by the general formula I are examples of the desirable aspect which do not contain a tetravalent metal element. The specific examples represented by the general formula II are examples of the desirable aspect which contain only titanium (Ti) as a tetravalent metal element.

The multielement composite oxide powder satisfying either one of the general formula I and the general formula II is preferably primarily tetragonal crystals. By being tetragonal crystals, the crystallinity can be stabilized. Whether or not the prime crystal is tetragonal can be analyzed by an X-ray diffraction (XRD) method.

### <Production Method>

The multielement composite oxide powder according to the embodiment can be produced as follows. The method for producing the multielement composite oxide powder includes mixing oxides of constituent metal elements to obtain a mixed powder, subjecting the mixed powder to plasma treatment, taking out a stable phase after the plasma treatment, and heat-treating the stable phase in an oxygen-containing atmosphere to obtain a composite oxide.

Oxides of constituent metal elements are used as raw materials of the multielement composite oxide powder. Four or more metal oxides are used as raw materials. For example, in a case of producing a composite oxide powder including composite oxides containing W, Mo, V, and Nb as constituent metal elements, examples of raw materials to be prepared include powder samples of tungsten trioxide (WO₃), molybdenum trioxide (MoO₃), vanadium pentoxide (V₂O₅), and niobium pentoxide (Nb₂O₅). The prepared samples are mixed to obtain a mixed powder of the raw materials.

In addition to these materials, oxide powders having different valences may be used as raw materials. Examples of such raw materials include WO₂, MoO₂, VO, V₂O₃, VO₂, NbO, Nb₂O₃, and NbO₂.

As the raw materials, oxides of the constituent metal elements are preferably used. For example, in a case of producing a W-Mo-V-Ta-O-based composite oxide powder, a tungsten oxide powder, a molybdenum oxide powder, a vanadium oxide powder, and a tantalum oxide powder are preferably used. By using the oxides of the respective constituent metal elements, the composition can be easily controlled. If a composite oxide is used as a raw material, there is a possibility that the composite oxide would cause a variation in composition.

Metal oxide nanoparticles are obtained by subjecting the mixed powder to plasma treatment. As the plasma treatment, for example, inductively coupled plasma treatment is performed. Inductively coupled plasma treatment is a method using a plasma flame. For example, the mixed powder is introduced into a plasma flame by a carrier gas and sublimated. The mixed powder is heated to, for example, 10000°C or higher in the plasma flame, and thereby sublimated. The sublimated gas is rapidly cooled to room temperature in an oxygen atmosphere, causing deposition, yielding a mixed oxide of the constituent metals. The particle size of the resulting powder particles can be controlled by controlling the rate at which the powder is introduced into the plasma. For example, by introducing the sample at 100 g/min or less, the average particle size can be made smaller than 1 µm, and even 100 nm or smaller.

In addition, in a method in which four or more metal oxide powders are introduced into the plasma flame, a difference may arise between the composition ratio of the added metal oxides and the composition ratio of the obtained composite oxide. This is because the melting points or boiling points are different between the metal oxides as the raw materials. Therefore, controlling of the composition is possible, by grasping the composition deviation between the added metal oxides and the obtained composite oxide.

If composition deviation occurs, a plurality of composite oxides (composite oxides of four or more elements) having different composition ratios may be formed. Even if a plurality of composite oxides of four or more elements having different composition ratios are present, the oxide powder would be usable. However, if the composition deviation is too large, the performance may be deteriorated.

In addition, in order to control the composition deviation, the four or more metal oxide powders as raw materials are preferably mixed and then introduced into the plasma flame. As a method for mixing the four or more metal oxide powders as raw materials, a mixer such as a ball mill may be used. Mixing may be carried out by either a dry method or a wet method, but wet mixing is preferred. If the slurry is prepared by a wet method, the amount of the slurry to be added to the plasma flame can be easily controlled. In other words, a composite oxide having four or more constituent metal elements can be formed by introducing a raw material powder obtained by mixing four or more metal oxide powders into the plasma flame.

The plasma treatment is desirably performed in an oxygen-containing atmosphere. For example, in the plasma treatment, a mixed gas of N₂ and O₂ or a mixed gas of Ar and O₂ is used as a carrier gas. By performing the plasma treatment in an oxygen-containing atmosphere, the amount of oxygen deficiency generated in the metal oxide nanoparticles can be controlled. Although the oxygen deficiency can be eliminated by performing the heat treatment in a later stage, the oxygen deficiency is desirably reduced in advance upon the plasma treatment, from the viewpoint of preventing the oxygen deficiency from unintentionally remaining.

In the powder obtained after the plasma treatment, nanoparticles having a primary particle diameter of less than 1 um and coarse particles having a primary particle diameter of 1 um or more may be mixed. Among these powder particles, the nanoparticles smaller than 1 um are taken out as a stable phase and used for an intermediate product. For example, coarse particles having a particle size of 1 um or more can be removed by screening to separate the stable phase. The reason for taking out the stable phase is that there is a possibility that the reaction into the composite oxide has not been stable for the coarse particles. In addition, if the reaction into the composite oxide is not stable, there is a possibility that a predetermined amount of a tunnel structure having five or more vertices has not been formed. The particle size of the composite oxide particles is preferably smaller than 1 µm, and more preferably 100 nm or smaller. This is because the compositing reaction is more stable with smaller particles.

For the screening of coarse particles, screening with a sieve having an appropriate mesh may be performed, or separation using cyclone treatment may also be performed. A cyclone is sometimes referred to as a powder separator. A cyclone is a type of centrifuge. In the cyclone treatment, nanoparticles smaller than 1 um can be taken out by using an air flow.

The extracted stable phase is subjected to heat treatment in an oxygen-containing atmosphere. For example, the stable phase is fired in air. Crystallization proceeds by the heat treatment, and a composite oxide free of oxygen deficiency is obtained. The heat treatment is performed at a temperature in a range of, for example, 550°C or higher and 1250°C or lower. The heat treatment temperature is preferably 550°C or higher and 800°C or lower. The heat treatment is performed, for example, for one hour or more. In addition, the heat-treated composite oxide powder is accompanied by grain growth. Therefore, the particle size of the composite oxide powder may exceed 1 um. The upper limit of the particle size of the composite oxide powder is not particularly limited, but is preferably 10 µm or less. If the particle size is larger than 30 µm, the necessary surface area cannot be obtained, and the performance as an electrode layer or a catalyst may be deteriorated. From this point of view, the average particle size of the heat-treated composite oxide powder is preferably 30 µm or smaller, and more preferably smaller than 1 um. <Measurement Method>

A method for examining the composition and a method of examining the crystal structure of the composite oxide, as well as a method for measuring the particle size of the oxide particle will be described. Examination of the crystal structure includes examining for the polygonal tunnel structure. The measurement of the particle size includes measurement of the major axis, the minor axis, and the aspect ratio of the oxide particle.

### (Method for Measuring Composition)

The composition of the composite oxide contained in the multielement composite oxide powder, that is, the contents of the constituent metal elements and oxygen, can be determined by measurement using inductively coupled plasma (ICP) emission spectrometry and measurement using inert gas fusion-infrared absorption spectrometry.

First, a method for measuring the amount of metal elements by ICP emission spectrometry will be described. A sample is weighed into a closed container, decomposed by heating with hydrofluoric acid and nitric acid, and adjusted to a predetermined volume with pure water. For the obtained solution, the amount of metal elements is measured by ICP emission spectrometry to determine the content of each metal element in the sample.

The oxygen content can be determined as follows. The oxygen content in the sample can be determined by weighing out the sample and measuring oxygen by inert gas fusion-infrared absorption spectrometry.

The amount of metal elements detected by ICP emission spectrometry is assumed to be 100 atm%. Among them, the total amount of hexavalent and pentavalent metal elements is calculated. The proportion of tetravalent metal elements is also calculated with reference to the amount of the metal elements detected by ICP emission spectrometry as 100 atm%.

### (Examination of Crystal Structure)

The polygonal tunnel structure included in the crystal structure of the composite oxide can be examined by analyzing an observation image obtained by observing with a scanning transmission electron microscope (STEM). A HAADF-STEM image is used for scanning transmission electron microscopy (STEM) analysis. HAADF-STEM stands for high-angle annular dark-field scanning transmission electron microscopy. Hereinafter, the HAADF-STEM image is simply referred to as the STEM image. In the STEM image, a metal element may appear as a white dot.

A STEM observation is performed at a magnification of 10,000,000 with an accelerating voltage of 200 kV.

Whether or not a polygonal tunnel structure is included in the crystal structure can be confirmed by performing measurement as follows. In the STEM observation of the tunnel structure, a fine sample of the composite oxide powder is prepared by a dispersion method or with a microtome. If the diameter of the particles in the sample is smaller than 100 nm, a sample having a thickness of 50 nm to 100 nm is prepared by a dispersion method. If the particle size is 100 nm or larger, a sample having a thickness of 50 nm to 100 nm is prepared with a microtome.

STEM observation is performed from the major axis direction along the major axis of the oxide particle, and a STEM image that includes an area of at least 5 nm × 5 nm in the region excluding a 1 nm wide portion on the outer periphery (a peripheral portion) of the oxide particles is acquired. The major axis direction of the oxide particle before sample preparation may be parallel to the c-axis direction in the structural crystal. In the STEM image, a portion having an area of 5 nm × 5 nm not including the peripheral portion is observed. In the area 25 nm² portion, among the white dots representing metal atoms, adjacent white dots spaced at a distance between their centers being equal to or greater than 0 nm and 0.5 nm or less are connected to each other to define a polygon having five or more vertices. A portion where no white dot is visible inside a pentagon or a hexagon defined by connecting the white dots is determined to be a polygonal tunnel. In addition, if a polygonal tunnel is observed as a result of performing such STEM observation from the major axis direction, it is recognized that a polygonal tunnel having five or more vertices and extending in the major axis direction along the particle major axis is present. In addition, although a portion in which a white dot is not visible inside a tetragon can be determined as a tunnel, the number of tetragonal tunnels is not included in the number of polygonal tunnels having five or more vertices. In addition, there is a high probability that a triangular portion is not a tunnel even if a white dot is not visible inside the triangle. Therefore, a triangular portion is not considered a tunnel.

A sample having a thickness of 50 nm or more has 100 or more layers, and if a metal atom is present therein, it is observed as a white dot. Therefore, if there is a portion having no white dot, the portion can be determined to be a tunnel. In addition, if a result of measurement in the major axis direction indicates that a tunnel structure is present, the oxide particle can be considered to have a columnar crystal structure grown in the major axis direction.

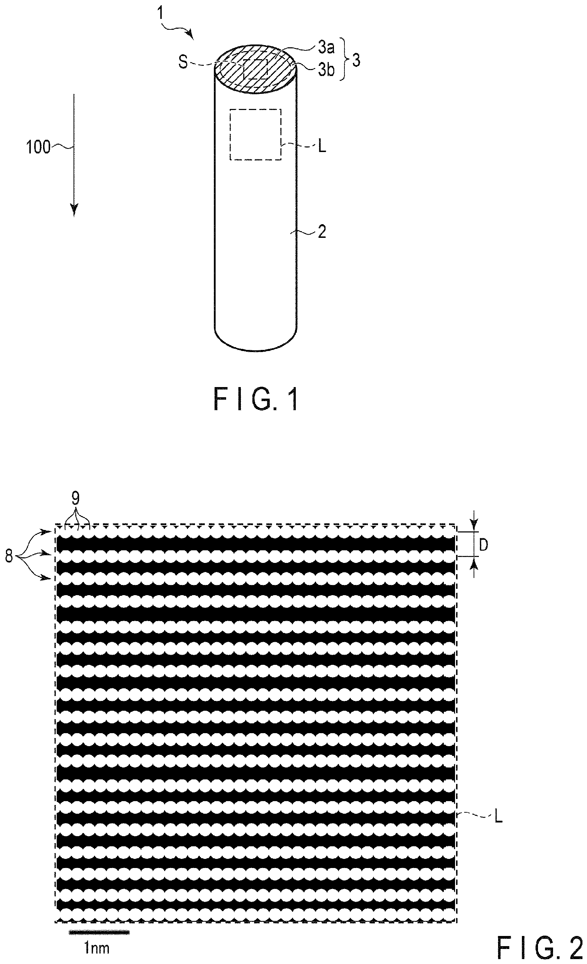

A specific example of the measurement will be described with reference to FIGS. 1 to 4.

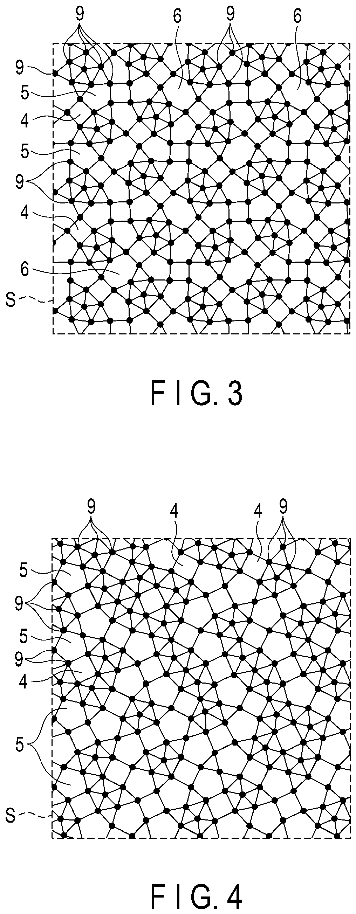

FIG. 1 is a schematic perspective view representing a multielement composite oxide powder according to an embodiment. FIG. 2 is an enlarged conceptual diagram representing section L shown in FIG. 1. FIGS. 3 and 4 are enlarged conceptual diagrams representing an example of section S shown in FIG. 1.

An oxide particle 1 of the multielement composite oxide powder shown in FIG. 1 has a major axis along a first direction 100 and a minor axis intersecting the first direction 100. In the example shown in the figure, the oxide particle 1 is illustrated as having a cylindrical shape, but the shape of the oxide particle 1 is not limited to the illustrated shape. The oxide particle 1 includes a lateral surface 2 in a major axis direction along the first direction 100 and a plane 3 intersecting the first direction 100. The plane 3 may be a cross-section exposed during sample preparation by a microtome. Alternatively, the plane 3 comprises a main area 3a and a peripheral portion 3b corresponding to a portion of 1 nm periphery.

FIG. 2 corresponds to a STEM image obtained by STEM measurement of the lateral surface 2 in the longitudinal direction of the oxide particle 1. By performing STEM observation of the lateral surface 2 from a direction intersecting the first direction 100, a STEM image like that represented by FIG. 2 may be acquired. In the example shown in the figure, it can be confirmed that layers 8, each including metal atoms 9 aligned in a straight line, are arranged substantially in parallel with a distance D of 0.3 nm to 0.5 nm therebetween, so that a layered structure is present.

FIGS. 3 and 4 respectively show, for different examples of oxide particles, a state in which the metal atoms 9 are connected in the STEM image obtained by the STEM measurement for the section S having an area of 5 nm × 5 nm in the main area 3a excluding the peripheral portion 3b of the plane 3. In the actual STEM image, the metal atoms are observed as white dots as described above; however, in order to clarify the drawings, the color is inverted so that the metal atoms are illustrated as black dots. Similarly, white portions in FIGS. 3 and 4 appear in black in the actual STEM image.

FIGS. 3 and 4 schematically represent 5 nm × 5 nm STEM images. A tunnel shape that is cutoff in appearance at the edge of the STEM image is not counted in the number of tunnel shapes. In other words, in the 5 nm × 5 nm STEM images, only the tunnel shapes whose outline can be observed are counted.

The example shown in FIG. 3 represents a STEM analysis illustrating a crystal structure of Example 1 described below. In this example, thirty-nine pentagonal tunnels 5 and eight hexagonal tunnels 6 can be confirmed. In addition, twenty-seven tetragonal tunnels can be confirmed.

The example shown in FIG. 4 represents a STEM analysis illustrating a crystal structure of Example 5 described below. In this example, thirty-one pentagonal tunnels 5 can be confirmed. In addition, thirty-two tetragonal tunnels can be confirmed.

### (Measuring Method of Particle Size)

In order to measure the major axis, the minor axis, and the aspect ratio of the oxide particle, the composite oxide powder is subjected to TEM observation using a transmission electron microscope (TEM) . The TEM may be a STEM. For example, a TEM image magnified 30000 times is used. The major axis and the minor axis of the oxide particle appearing in the TEM image are measured. The longest diagonal is defined as the major axis. A line perpendicularly extended from the midpoint of the major axis is defined as the minor axis. The major axis and the minor axis of each of ten oxide particles are measured. The average values for the major axes and the average values for the minor axes are respectively defined as the average particle size of the major axes and the average particle size of the minor axes, respectively. The aspect ratio is determined by "the average particle size of the major axes/the average particle size of minor axes".

### [Electrochemical Device]

The multielement composite oxide powder according to the embodiment can be applied to and included in, for example, an electrochemical device as an electrochemically functional material. Examples of applications of the multielement composite oxide powder as an electrochemically functional material include an electrode material of an electric storage device and an electrode material of an electrochromic device. In addition, by imparting electrical conductivity to the multielement composite oxide powder according to the embodiment, the volume resistance value of the film can be reduced.

Examples of the electric storage device include an electric storage device in which a negative electrode and a positive electrode face each other with an electrically non-conductive layer interposed therebetween, and which uses an electrolytic solution. The device of this example is a device capable of repeating a reaction of storing charges (charging) and a reaction of releasing charges (discharging) by an oxidation-reduction reaction or adsorption and desorption of ions. Unlike a solar cell, the device does not generate power by itself. Specific examples of the electric storage device include a condenser, a capacitor, and a lithium ion secondary battery.

With the electrode material to which the multielement composite oxide powder is applied, both the oxidation-reduction reaction and the adsorption and desorption of ions can be performed. Therefore, the electrode material can be applied to various electric storage devices. Whether the oxidation-reduction reaction occurs or not can be confirmed by cyclic voltammetry. When charge and discharge are performed at a constant scanning voltage, a peak is observed at a specific voltage if an oxidation-reduction reaction occurs. No peak is observed for ion adsorption and desorption.

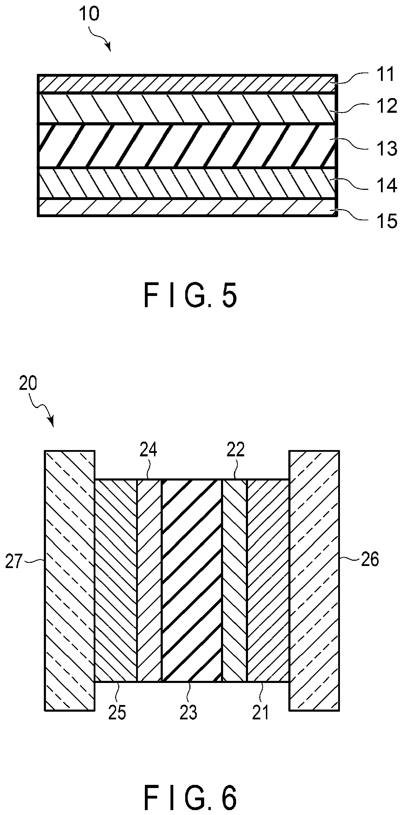

FIG. 5 is a conceptual diagram showing a configuration of an electric storage device. This figure is a conceptual diagram showing an example of the structure of the electrochemical device according to the embodiment. The electric storage device 10 shown in the figure includes a negative electrode-side electrode layer 11, a negative electrode layer 12, a separator layer 13, a positive electrode layer 14, and a positive electrode-side electrode layer 15. This figure shows the structure of the cell portion.

In the electric storage device 10, the negative electrode layer 12 and the positive electrode layer 14 are respectively disposed on one principal surface of the separator layer 13 and the other principal surface on the reverse side thereto. Assuming that the side facing the separator layer 13 is the inner side, the negative electrode-side electrode layer 11 is provided on the outer side of the negative electrode layer 12. Similarly, the positive electrode-side electrode layer 15 is provided on the outer side of the positive electrode layer 14.

The negative electrode-side electrode layer 11 and the positive electrode-side electrode layer 15 are formed of a material having electrical conductivity. Examples of the material having electrical conductivity include aluminum, copper, stainless steel, platinum, ITO, IZO, FTO, SnO₂, and InOs. Further, the thickness is preferably in the range of 5 um to 50 um.

One of the negative electrode layer 12 and the positive electrode layer 14 is an electrode layer containing the multielement composite oxide powder according to the embodiment as an electrode material. The electrode layer using the multielement composite oxide powder is preferably used for the negative electrode layer 12. The electrode layer using the multielement composite oxide powder may be used for both the negative electrode layer 12 and the positive electrode layer 14.

In a case where the electrode layer with the multielement composite oxide powder is used for the negative electrode layer 12, the positive electrode layer 14 is preferably made of a Li composite oxide such as LiCoO₂, LiMnO₂ and LiNiO₂. Based on a Li counter electrode, an electrode with lower potential is a negative electrode, and an electrode with higher potential is a positive electrode. In combination with the above-described positive electrode layer, the electrode layer using the multielement composite oxide powder serves as a negative electrode layer. The above Li composite oxides are generally used as a positive electrode active material. In other words, by using the electrode layer according to the embodiment as a negative electrode layer, performance as an electric storage device can be imparted thereto.

The electrode layer preferably contains the multielement composite oxide powder according to the embodiment in a range of 50% by mass or more and 100% by mass or less. Examples of other additives for the electrode layer include an electrically conductive powder and a binder. Examples of the electrically conductive powder include carbon powder such as acetylene black.

The thickness of the electrode layer is not particularly limited, but is preferably 1 µm or more and 100 µm or less. If the thickness of the electrode layer is less than 1 µm, the absolute amount of the electrode material is small, so that the capacity would not be satisfactory. If the thickness is more than 100 µm, the internal resistance of the electrode layer may increase. If the internal resistance increases, the charge/discharge speed will decrease.

The porosity of the electrode layer is preferably 10% or more and 80% or less. By providing the electrode layer with pores, it is possible to increase the area for contact with the electrolytic solution.

Since the oxide particles of the multielement composite oxide powder as the electrode material have the polygonal tunnel structure, the contact area with the electrolytic solution can be secured even if the porosity of the electrode layer is somewhat low. The porosity of the electrode layer is more preferably 10% or more and 50% or less. The porosity of the electrode layer may be 20% or more and 80% or less.

The separator layer 13 is disposed to set a spacing between the negative electrode layer 12 and the positive electrode layer 14. Examples of the separator layer 13 include porous layers such as a polyethylene porous layer and a polypropylene porous layer. The separator layer 13 can be impregnated with an electrolytic solution containing Li ions. As the electrolytic solution, an organic solvent, an ionic liquid, or the like can be put in application. Examples of the organic solvent include ethylene carbonate (EC), propylene carbonate (PC), butylene carbonate (BC), dimethyl carbonate (DMC), diethyl carbonate (DEC), ethyl methyl carbonate (EMC), gamma-butyrolactone (γ-BL), valerolactone (VL), and mixed solvents thereof. Examples of electrolytes include LiPF₆, LiBF₄, LiClO₄, LiCF₃SO₃, and mixed electrolytes thereof.

The electric storage device may have a cell having a stacked structure as described above. Further, in order to increase the capacity, the cell structure may be multilayered, or a structure where the cell is elongated and wound may be implemented.

Such an electric storage device can be used for, for example, a vehicle, an electronic device, and mechanical equipment.

Examples of the vehicle include an automobile and a railway car. Examples of the automobile include an automobile driven by a motor such as a hybrid vehicle and an electric automobile. The automobile is not particularly limited and may be a private car, a bus, a power crane, a truck, or the like.

The electronic device refers to a device driven by electricity. The mechanical equipment is equipped with operating equipment. Examples of the mechanical equipment include one selected from an elevator, a crane, a robot, a medical device, and a machine tool.

An electrochromic device is a material that undergoes a reversible change in photophysical properties upon application of an electric charge.

In a case where the multielement composite oxide powder according to the embodiment is used in an electrochromic layer of an electrochromic device, the layer preferably has a porosity of 30% or less, and more preferably 10% or less. In order to shield light, the porosity is preferably low. The porosity is preferably 0.01% or more. If the porosity is less than 0.01%, there is a possibility that the area of contact with the electrolytic solution will decrease. In addition, it is preferable that the multielement composite oxide powder according to the embodiment be contained in a range of 50% by mass or more and 100% by mass or less of the electrochromic layer.

FIG. 6 shows a configuration of the electrochromic device. This figure is a conceptual diagram showing another example of the structure of the electrochemical device according to the embodiment. The electrochromic device 20 shown in the figure includes an electrolyte layer 23 and a pair of electrochromic layers respectively disposed on one principal surface of the electrolyte layer 23 and the other principal surface on the reverse side thereof. The pair of electrochromic layers includes an electrochromic layer 22 and a counter electrode 24. The electrochromic device 20 further includes a first electrode 21 provided on the outer side of the electrochromic layer 22 and a second electrode 25 provided on the outer side of the counter electrode 24, with each side facing toward the electrolyte layer 23 regarded as the inner side. In addition, the electrochromic device 20 includes a first substrate 26 and a second substrate 27 which are a pair of substrates disposed on the outer sides of the first electrode 21 and the second electrode 25.

Since the electrochromic device performs transmitting and blocking of light, the first substrate 26 and the second substrate 27 are preferably transparent substrates. As the transparent substrate, for example, a glass substrate may be used. The first electrode 21 is provided to ensure adhesion and electrical conduction between the first substrate 26 and the electrochromic layer 22. The second electrode 25 is provided to ensure adhesion and electrical conduction between the second substrate 27 and the counter electrode 24. As an example, an Al (aluminum) electrode may be used. The counter electrode 24 is provided to perform an oxidation reaction (or a reduction reaction) accompanied by charge transfer. As the counter electrode 24, for example, a stacked vapor-deposited film of IrO₂/SnO₂ may be used. In addition, the electrolyte layer 23 serves to supply and transport ions. The electrolyte layer 23 preferably does not transmit electrons. An example of the electrolyte layer 23 includes a Ta₂O₅ deposition film. The electrochromic layer 22 is an electrode layer containing the multielement composite oxide powder according to the embodiment. If the exemplified materials are combined, the device can be formed with thin films, such as those by vapor deposition. Therefore, it is possible to provide a device excellent in mass productivity.

In the electrochromic device, when an external voltage is applied between the first electrode 21 and the second electrode 25, electrons are injected into the electrochromic layer 22 and ions are injected into the electrolyte layer 23. A phenomenon occurs in which cations are released into or anions are taken into the electrolyte layer 23. At the same time, electrons are transferred to an external power source through the first electrode 21 or the second electrode 25. These phenomena cause coloration phenomena. Furthermore, when a reverse voltage is applied or the electrodes are short-circuited, a reverse reaction occurs to cause discoloring. In the case where the first substrate 26 and the second substrate 27 are transparent substrates, the device becomes transparent after discoloring.

### [Catalyst]

The multielement composite oxide powder according to the embodiment can also be used as a catalyst. The catalyst containing the multielement composite oxide powder may be, for example, a thermal catalyst or a photocatalyst. The photocatalyst is a substance that exhibits a catalytic action when irradiated with light. Herein, the term "thermal catalyst" refers to a typical catalyst, which, unlike the photocatalyst, exhibits a catalytic action without light irradiation.

An example of a reaction in which a catalyst containing such a multielement composite oxide powder exhibits a thermal catalytic action, is a reaction of oxidizing ethanol to acetaldehyde.

The photocatalyst may have, for example, a function of decomposing an organic substance in contact with the surface thereof. For a specific example of the photocatalyst, when irradiated with light, the photocatalyst absorbs the light to form electrons and holes. They react with moisture in the air to change into active oxygen or a hydroxyl radical, and can exhibit photocatalytic performance. When the photocatalytic performance is exhibited, odor components and the like can be decomposed.

The composite oxide powder may be used alone as a catalyst. Alternatively, the form thereof may be changed depending on the environment in which the catalyst is used. For example, a thin layer of the composite oxide may be formed on a substrate and used as a catalyst. When used for a photocatalyst, the porosity of the thin layer is preferably 80% or less.

The uses described above are examples in which the multielement composite oxide powder according to the embodiment is used as powder. The multielement composite oxide powder according to the embodiment may be used as a bulk obtained using the powder as starting material. The bulk is a sintered body or the like. Further, the powder may be used for purposes other than the above. Examples of uses other than the above include use as functional materials for thermal and electrical systems such as thermoelectric materials, and dielectrics.

### [Examples]

Oxide powders were prepared as follows.

### (Examples 1 to 7 and Comparative Examples 1 and 2)

In Examples 1 to 7 and Comparative Examples 1 and 2, oxide powders were produced according to the method described above. Specifically, first, various metal oxides as raw materials were mixed so that the ratio of metal elements was the atomic ratio shown in Table 1 below to obtain a mixed powder. The obtained mixed powder was subjected to plasma treatment to composite the metal elements in the raw materials, and then a stable phase was extracted. The stable phase was fired in air for an hour to obtain a product. In the plasma treatment, a mixture gas of Ar and O₂ was used as a carrier-gas. The stable phase was fired at the firing temperature shown in Table 1. The stable phase was extracted by a method of collecting out particles of 100 nm or smaller.

Specifically, in Examples 1 to 6 and Comparative Examples 1 and 2, the mixed powder was made into a slurry then subjected to plasma treatment. In Example 7, plasma treatment was performed using the powder as it was.

In addition, a cyclone was used to extract particles of 100 nm or smaller.

### (Comparative Examples 3 and 4)

In Comparative Example 3 and 4, the oxide powder was produced by firing the mixed powder of the raw materials in air for one hour without performing the plasma treatment. As a raw material, a mixed powder was used in which various metal oxides were mixed at a ratio such that the ratio of the metal elements was the atomic ratio shown in Table 1. Firing was carried out at the firing temperatures shown in Table 1.

**[Table 1]**

| [Table 1] | Metal element ratio in mixed raw materials (atm%) | | | | | | Production method | Firing temperature (°C) |
|---|---|---|---|---|---|---|---|---|
| | Ti | V | Nb | Mo | Ta | W | | |
| Example 1 | 0 | 25 | 0 | 25 | 25 | 25 | Compositing by plasma treatment, and thereafter, firing the stable phase | 750 |
| Example 2 | 0 | 0 | 25 | 25 | 25 | 25 | Compositing by plasma treatment, and thereafter, firing the stable phase | 800 |
| Example 3 | 0 | 20 | 20 | 20 | 20 | 20 | Compositing by plasma treatment, and thereafter, firing the stable phase | 500 |
| Example 4 | 20 | 20 | 0 | 5 | 30 | 25 | Compositing by plasma treatment, and thereafter, firing the stable phase | 800 |
| Example 5 | 20 | 0 | 20 | 20 | 20 | 20 | Compositing by plasma treatment, and thereafter, firing the stable phase | 900 |
| Example 6 | 30 | 20 | 10 | 18 | 17 | 5 | Compositing by plasma treatment, and thereafter, firing the stable phase | 600 |
| Example 7 | 20 | 20 | 0 | 20 | 20 | 20 | Compositing by plasma treatment, and thereafter, firing the stable phase | 700 |
| Comparative Example 1 | 0 | 0 | 0 | 100 | 0 | 0 | Compositing by plasma treatment, and thereafter, firing the stable phase | 600 |
| Comparative Example 2 | 0 | 0 | 0 | 0 | 0 | 100 | Compositing by plasma treatment, and thereafter, firing the stable phase | 500 |
| Comparative Example 3 | 0 | 25 | 0 | 25 | 25 | 25 | Mixture firing | 750 |
| Comparative Example 4 | 20 | 20 | 0 | 20 | 20 | 20 | Mixture firing | 800 |

The composition of the oxide contained in the product obtained in each of the examples and the comparative examples was measured by the above-described ICP emission spectrometry and inert gas fusion-infrared absorption spectrometry. The measurement results and the compositions determined from the measurement results are shown in Tables 2 and 3 below. Specifically, the measured ratios of the constituent metal elements are summarized in Table 2. In addition, among the constituent metal elements, the contents of each of the hexavalent metal element (here, W and Mo), the pentavalent metal element (here, V, Nb, and Ta), and the tetravalent metal element (here, Ti) is summarized in Table 2. Table 3 summarizes the compositional formulas of the respective products and the values of the respective subscripts corresponding to the case where the respective compositions are applied to the general formula I (WₐMo_{b}A_{c}O_{z}) or the general formula II (WₐMo_{b}AₑTi_{f}O_{z}). However, in Comparative Examples 1 and 2, since powders of molybdenum trioxide and tungsten trioxide were respectively produced, they do not correspond to either of the general formulas; however, the values of the subscripts "a", "b" and "z", which are common to both of the general formulas, are summarized.

**[Table 2]**

| [Table 2] | Constituent metal element ratio in product (atm%) | | | | | | Proportion of valences of constituent metal elements (atm%) | | |
|---|---|---|---|---|---|---|---|---|---|
| | Ti | V | Nb | Mo | Ta | W | Hexavalent | Pentavalent | Tetravalent |
| Example 1 | 0 | 26 | 0 | 36 | 6 | 32 | 68 | 32 | 0 |
| Example 2 | 0 | 0 | 20 | 33 | 15 | 32 | 65 | 35 | 0 |
| Example 3 | 0 | 18 | 19 | 36 | 8 | 19 | 55 | 45 | 0 |
| Example 4 | 6 | 9 | 0 | 20 | 15 | 50 | 70 | 24 | 6 |
| Example 5 | 3 | 0 | 10 | 38 | 7 | 42 | 80 | 17 | 3 |
| Example 6 | 20 | 18 | 10 | 32 | 13 | 7 | 39 | 41 | 20 |
| Example 7 | 4 | 9 | 0 | 25 | 15 | 47 | 72 | 24 | 4 |
| | 5 | 22 | 0 | 35 | 5 | 33 | 68 | 27 | 5 |
| Comparative Example 1 | 0 | 0 | 0 | 100 | 0 | 0 | 100 | 0 | 0 |
| Comparative Example 2 | 0 | 0 | 0 | 0 | 0 | 100 | 100 | 0 | 0 |
| Comparative Example 3 | 0 | 25 | 0 | 25 | 25 | 25 | 50 | 50 | 0 |
| Comparative Example 4 | 20 | 20 | 0 | 20 | 20 | 20 | 40 | 40 | 20 |

**[Table 3]**

| [Table 3] | Compositional formula |
|---|---|
| Example 1 | W_{0.32}Mo_{0.36}V_{0.26}Ta_{0.06}O_{2.8} |
| Example 2 | W_{0.32}Mo_{0.33}Nb_{0.2}Ta_{0.15}O_{2.8} |
| Example 3 | W_{0.19}Mo_{0.36}V0.₁₈Nb_{0.19}Ta_{0.08}O_{2.6} |
| Example 4 | W_{0.5}Mo_{0.2}V_{0.09}Ta_{0.15}Ti_{0.06}O_{2.9} |
| Example 5 | W_{0.42}Mo_{0.38}Nb_{0.1}Ta_{0.07}Ti_{0.03}O_{2.5} |
| Example 6 | W_{0.07}Mo_{0.32}V_{0.18}Nb_{0.1}Ta_{0.13}Ti_{0.2}O_{2.4} |
| Example 7 | W_{0.474}Mo_{0.25}V_{0.09}Ta_{0.15}Ti_{0.04}O_{2.8} |
| | W_{0.33}Mo_{0.35}V_{0.22}Ta_{0.05}Ti_{0.05}O_{2.8} |
| Comparative Example 1 | MoO₃ |
| Comparative Example 2 | WO₃ |
| Comparative Example 3 | W_{0.25}Mo_{0.25}V_{0.25}Ta_{0.25}O_{2.6} |
| Comparative Example 4 | W_{0.2}Mo_{0.2}V_{0.2}Ta_{0.2}Ta_{0.2}O_{2.5} |

**[Table 3] (continued)**

| [Table 3] | General formula I: WₐMo_{b}A_{c}O_{z} | | | | | | | | | |
|---|---|---|---|---|---|---|---|---|---|---|
| | General formula II: WₐMo_{b}AₑTi_{f}O_{z} | | | | | | | | | |
| | Applied formula | A | a | b | c | z | e | f | a/b | a+b |
| Example 1 | I | V, Ta | 0.32 | 0.36 | 0.32 | 2.8 | - | - | 0.89 | 0.68 |
| Example 2 | I | Nb, Ta | 0.32 | 0.33 | 0.35 | 2.8 | - | - | 0.96 | 0.65 |
| Example 3 | I | V, Nb, Ta | 0.19 | 0.36 | 0.45 | 2.6 | - | - | 0.53 | 0.55 |
| Example 4 | II | V, Ta | 0.50 | 0.20 | - | 2.9 | 0.24 | 0.06 | 2.5 | 0.7 |
| Example 5 | II | Nb, Ta | 0.42 | 0.38 | - | 2.5 | 0.17 | 0.03 | 1.11 | 0.8 |
| Example 6 | II | V, Nb, Ta | 0.07 | 0.32 | - | 2.4 | 0.41 | 0.2 | 0.22 | 0.39 |
| Example 7 | II | V, Nb | 0.47 | 0.25 | - | 2.8 | 0.24 | 0.04 | 1.88 | 0.72 |
| | II | V, Nb | 0.33 | 0.35 | - | 2.8 | 0.27 | 0.05 | 0.94 | 0.68 |
| Comparative Example 1 | not applicable | - | 0 | 1 | - | 3 | - | - | 0 | 1 |
| Comparative Example 2 | not applicable | - | 1 | 0 | - | 3 | - | - | ∞ | 1 |
| Comparative Example 3 | I | V, Ta | 0.25 | 0.25 | 0.5 | 2.6 | - | - | 1 | 0.5 |
| Comparative Example 4 | II | V, Ta | 0.2 | 0.2 | - | 2.5 | 0.4 | 0.2 | 1 | 0.4 |

As comprehensible from the tables, there was a compositional difference between the raw material mixed powder and the obtained multielement composite oxide powder.

The multielement composite oxide powder according to Examples 1 to 6 was a powder having a single composition. On the other hand, the oxide powder according to Example 7 was a mixture of powders of two compositions. From a comparison between Examples 1 to 6 and Example 7, it can be recognized that a multielement composite oxide powder having a single composition can be easily obtained by making the raw material powder into a slurry and then performing the plasma treatment.

The oxide particles contained in the oxide powder produced in each of the examples and the comparative examples were observed by STEM. The shape, the length of each of the minor axis and the major axis, the aspect ratio, and the crystal structure of the oxide particles confirmed by the observation are summarized in Table 4 below. Here, regarding the particle shapes, particles having an aspect ratio of 2 or more are referred to as "acicular", and particles having an aspect ratio of less than 2 are referred to as "spherical". It should be noted that the particles classified as "acicular" do not necessarily have a sharp needle tip, and include particles having a columnar shape, a rod shape, or the like. Regarding the crystal structure, whether or not the crystal structure has a polygonal tunnel structure and whether or not it has a sub-phase are indicated. The presence or absence of the sub-phase was determined by element mapping of scanning electron microscope-energy dispersive X-ray spectrometry (SEM-EDX) analysis. When the particles were observed at a magnification of 1000 times and mapping was performed for the constituent metal elements, it was determined that dispersion of each element was uniform in nine or more particles out of ten measured acicular particles. For simplicity, determination may be made based on the presence or absence of a hetero-phase peak in XRD analysis.

**[Table 4]**

| [Table 4] | Particle shape | Minor axis (nm) | Major axis (nm) | Aspect ratio | Whether or not the structure corresponds to a tunnel structure | Presence or absence of sub-phase |
|---|---|---|---|---|---|---|
| Example 1 | Acicular | 100 | 220 | 2.2 | Corresponds | Absent |
| Example 2 | Acicular | 200 | 500 | 2.5 | Corresponds | Absent |
| Example 3 | Acicular | 10 | 30 | 3 | Corresponds | Absent |
| Example 4 | Acicular | 150 | 300 | 2 | Corresponds | Absent |
| Example 5 | Acicular | 1000 | 3000 | 3 | Corresponds | Absent |
| Example 6 | Acicular | 80 | 200 | 2.5 | Corresponds | Absent |
| Example 7 | Acicular | 50 | 100 | 2 | Corresponds | Absent |
| | Acicular | 70 | 250 | 3.6 | Corresponds | |
| Comparative Example 1 | Acicular | 4000 | 10000 | 2.5 | Not corresponding | Absent |
| Comparative Example 2 | Spherical | 10 | 10 | 1 | Not corresponding | Absent |
| Comparative Example 3 | Spherical | 150 | 200 | 1.33 | Not corresponding | Present |
| Comparative Example 4 | Spherical | 200 | 220 | 1.1 | Not corresponding | Present |

As can be recognized from the table, the composite oxide powders according to the examples corresponded to a crystal structure having a tunnel structure. In addition, since the results of measurement in the major axis direction indicate that the tunnel structure was present, the oxide particles can be considered to have a columnar crystal structure grown in the major axis direction. In Example 5, since the heat treatment temperature was high, the major axis was as large as 3000 nm (= 3 µm).

In addition, in all of the multielement composite oxide powders according to Examples 1 to 7, tetragonal crystals were the main component, and no sub-phase was observed.

### <Performance Evaluation>

The oxide powders produced in the respective examples and comparative examples were evaluated in terms of performance as an electrochemically functional material for electrochemical devices and catalytic performance. Specifically, measurement of volume resistance, measurement of a melting point, measurement of a discharge capacity, measurement of a color switching rate, and evaluation of catalytic performance were performed as follows.

### (Measurement of Volume Resistance)

The volume resistance value of the oxide powder was measured by the following method. A ϕ20 mm cylindrical tube-shaped unit was filled with 1 g to 3 g of sample powder. As a measurement method, a four-terminal method was used, and the four terminals were arranged at an interelectrode interval of 3 mm in a linear direction. A volumetric resistivity was measured with pressures of 4 N (Newton), 8 N, 12 N, 16 N and 20 N being applied to the sample by a hydraulic jack, and the lowest value of the volumetric resistivity was defined as the volumetric resistivity of the material.

The volumetric resistivity determined for each of the examples and the comparative examples is summarized in Table 5 below. Volumetric resistivity is inversely proportional to electrical conductivity. Thus, a lower value of the volume resistivity indicates a higher electrical conductivity.

### (Measurement of Melting Point)

The melting point of the oxide powder was measured by the following method. A sample of 3 g was placed in a 10 ml alumina crucible with a cover, and fired in an air atmosphere in a box oven. The sample was held at a target temperature for one hour then cooled to room temperature by natural cooling, and the temperature which resulted in the sample sticking to the interior of the crucible and unable to be taken out as particles was defined as the melting point.

The melting points determined for the respective examples and comparative examples are summarized in Table 5 below. The melting point is an indicator of thermal stability. The higher the melting point, the higher the thermal stability of the oxide. In Example 1 to 5, even when the target temperature was 1100°C, the sample could be taken out from the crucible after cooling. For Examples 1 to 5, the melting point is indicated as "1000°C or higher". For Comparative Example 2, a literature value is indicated.

### (Measurement of Discharge Capacity)

An electric storage device using the oxide powder was produced, and the discharge capacity of the oxide powder was measured.

The electric storage device was produced as follows. As the electric storage device, one having the cell structure shown in FIG. 5 was produced.

First, an electrode layer was prepared as follows. Acetylene black was mixed with the oxide powder produced in each of the examples and the comparative examples to prepare a paste. The prepared paste was applied onto a substrate, and dried and pressed to form an electrode layer. In the paste, 90 parts by mass of the oxide powder and 10 parts by mass of acetylene black were mixed. Thus, an electrode layer having a weight per unit area of 3.3 mg/cm², a film thickness of 20 um, and a porosity of 20% was obtained.

As the negative electrode-side electrode layer 11 and the positive electrode-side electrode layer 15, a 15 um thick aluminum foil with an electrically conductive coating was prepared. The electrode layer produced as described above was used as the negative electrode layer 12. The positive electrode layer 14 was produced using LiCoO₂ powder. The weight per unit area of the positive electrode layer was set to an amount having a sufficient margin with respect to the electric capacity of the negative electrode layer. The area of each of the negative electrode and the positive electrode was ϕ 16 mm (about 2 cm²).

A polyethylene porous layer (having a thickness of 20 µm) was used as the separator layer 13. The negative electrode-side electrode layer 11, the negative electrode layer 12, the separator layer 13, the positive electrode layer 14, and the positive electrode-side electrode layer 15 were stacked in this order to obtain a stack. The stack was incorporated into an aluminum cell container. Then, after impregnation with an electrolytic solution, the cell was subjected to a defoaming treatment and then sealed. As a solvent of the electrolytic solution, a mixed solution of propylene carbonate (PC) and ethyl methyl carbonate (EMC) was used. LiPF₆ and LiBF₄ as electrolytes were mixed with the electrolyte solvent.

As described above, the electric storage device was produced. Using the produced electric storage device, electric charge and discharge were performed under the following conditions, and the discharge capacity was measured. The charge voltage and the discharge voltage were set to 1.55 V and 3 V, respectively, and charge and discharge were performed at a constant current of 0.5 mA. During discharge, the discharge capacity was measured. The measurement results are summarized in Table 5 below.

### (Measurement of Color Switching Rate)

An electrochromic device using the oxide powder was prepared, and the color switching rate was measured.

As the electrochromic device, one having the cell structure shown in FIG. 6 was prepared.

The electrochromic layer 22 was formed by mixing an oxide powder and an organic substance and applying the obtained mixture onto a glass substrate having an ITO film. Namely, a transparent glass substrate was used as the first substrate 26, and ITO was used as the first electrode 21. A Ta₂O₅ vapor deposition film was used for the electrolyte layer 23, and a stacked vapor deposition film of IrO₂/SnO₂ was used for the counter electrode 24. A transparent glass substrate and an Al electrode were used for the second substrate 27 and the second electrode 25, respectively.

The response time of color switching caused by voltage application was measured for the produced electrochromic device. As the response time (s), the time (seconds) taken for transfer from the colored state to the transparent state was measured by the following method. The color switching was measured with a UV-visible absorptiometer. When a voltage of 1.2 V was applied to the electrochromic device, the time required for the transmittance of light having a wavelength of 600 nm to change from 20% to 70% was measured and recorded as a response time. The obtained response time of color switching is summarized in Table 5 below.

### (Evaluation of Catalytic Performance)

The catalytic performance of the oxide powder was evaluated by evaluating the efficiency of the oxidation reaction of ethanol to acetaldehyde using the oxide powder as a catalyst. Specifically, the yield of the product (acetaldehyde) in the catalytic reaction was measured.

0.1 g of a sample and 2 g of SiO₂ having a particle size of 100 nm were mixed, and the obtained mixture was filled in a flow reactor. The mixture was reacted at a reaction temperature of 300°C by introducing ethanol at a flow rate of 21 ml/min using N₂ as a carrier gas. The species and amount of the product after passing through the reactor were measured by gas chromatography.

The yield was calculated from the following equation: Yield = [(molar quantity of acetaldehyde measured)/ (molar quantity of ethanol charged)]. The determined yields are summarized in Table 5 below.

| [Table 5] | Volume resistance (Ω · cm²) | Melting point (°C) | Discharge capacity (mAh/g) | Color switching rate (s) | Yield of catalytic reaction (%) |
|---|---|---|---|---|---|
| Example 1 | 2×10⁵ | 1000°C or higher | 180 | 10 | 89 |
| Example 2 | 5×10⁴ | 1000°C or higher | 175 | 12 | 91 |
| Example 3 | 1×10⁵ | 1000°C or higher | 200 | 7 | 98 |
| Example 4 | 8×10⁴ | 1000°C or higher | 190 | 8 | 85 |
| Example 5 | 6×10⁵ | 1000°C or higher | 150 | 20 | 70 |
| Example 6 | 7×10⁵ | 800 | 100 | 30 | 65 |
| Example 7 | 8×10⁶ | 800 | 110 | 35 | 70 |
| Comparative Example 1 | 2×10⁷ | 750 | 58 | 60 | 50 |
| Comparative Example 2 | 5×10⁶ | 1400 (Literature value) | 71 | 35 | 2 |
| Comparative Example 3 | 7×10⁸ | 750 | 9 | No performance | 1 |
| Comparative Example 4 | 2×10⁹ | 750 | 10 | No performance | 3 |

In Examples 1 to 7, multielement composite oxide powders were produced, each containing particles of composite oxides having a polygonal tunnel structure in which two or more hexavalent metal elements and two or more pentavalent metal elements accounted for 80 atm% or more of the constituent metal elements. In contrast, in Comparative Examples 1 and 2, powders of tungsten trioxide and molybdenum trioxide containing only one metal element were produced, respectively. In Comparative Examples 3 and 4, multielement composite oxide powders were produced, each containing particles of composite oxides in which two or more hexavalent metal elements and two or more pentavalent metal elements account for 80 atm% or more of the constituent metal elements, but did not have a polygonal tunnel structure. The multielement composite oxide powders according to Examples 1 to 6 were all superior in electrical conductivity, discharge capacity, response time, and catalytic performance as compared with the metal oxide powders according to Comparative Examples 1 and 2 and the multielement composite oxide powders according to Comparative Examples 3 and 4. The multielement composite oxide powders according to Comparative Examples 3 and 4 did not show color switching even when a voltage was applied, and did not exhibit electrochromism. All of the multielement composite oxide powders according to Examples 1 to 7 had higher melting points than the powders according to Comparative Examples 1, 3, and 4.

In Example 7, on one hand, the electrical conductivity, discharge capacity, response time, and catalytic performance were superior to those of the powders according to Comparative Examples 1, 3, and 4. On the other hand, in Example 7, since the obtained oxide powder was a mixed powder composed of two compositions, the volume resistance increased and the melting point was rather low as compared with Examples 1 to 6. This indicates that a multielement composite oxide powder having a singular composition is preferable.

In the multielement composite oxide powders according to Comparative Examples 3 and 4, a sub-phase was confirmed in the oxide particles. In Comparative Examples 3 and 4, since simple mixing and firing was performed, plasma treatment and subsequent extraction of a stable phase were not performed. In Comparative Examples 3 and 4, in contrast to Examples 1 to 7 in which the oxides were synthesized by firing the stable phase, it is presumed that various oxide phases were generated in a mixed state.

According to at least one embodiment and example described above, a multielement composite oxide powder is provided. The multielement composite oxide powder includes an oxide particle containing a composite oxide. The composite oxide contains constituent metal elements containing two or more hexavalent metal elements and two or more pentavalent metal elements at a content of 80 atm% or more in total and oxygen. The oxide particle has a major axis and a minor axis intersecting the major axis. The oxide particle has a polygonal tunnel structure including one or more polygonal tunnels of five or more vertices in a major axis direction along the major axis. The multielement composite oxide powder has high electrical conductivity and thermal stability, has high capacity as an electricity storing material, with high reversible reaction rate of electrochromism, and can exhibit high catalytic ability.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

Hereinafter, provided is an appendix listing the inventions according to the original claims of the original application.
1. A multielement composite oxide powder comprising an oxide particle including a composite oxide, the composite oxide containing:
   constituent metal elements containing two or more hexavalent metal elements and two or more pentavalent metal elements at a content of 80 atm% or more in total; and
   oxygen,
   the oxide particle having a major axis and a minor axis intersecting the major axis, and having a polygonal tunnel structure including one or more polygonal tunnels of five or more vertices in a major axis direction along the major axis.
2. The multielement composite oxide powder according to clause 1, wherein the constituent metal elements contain the hexavalent metal elements and the pentavalent metal elements at a content of 90 atm% or more in total.
3. The multielement composite oxide powder according to clause 1 or 2, wherein the constituent metal elements contain the hexavalent metal elements at a content of 40 atm% or more and 90 atm% or less.
4. The multielement composite oxide powder according to any one of clauses 1 to 3, wherein the constituent metal elements contain the pentavalent metal elements at a content of 9 atm% or more and 40 atm% or less.
5. The multielement composite oxide powder according to any one of clauses 1 to 4, wherein the constituent metal elements further contain one or more tetravalent metal elements at a content of 1 atm% or more.
6. The multielement composite oxide powder according to any one of clauses 1 to 5, wherein the hexavalent metal elements include two or more selected from the group consisting of W, Mo, Cr, Re, and Mn.
7. The multielement composite oxide powder according to any one of clauses 1 to 6, wherein the pentavalent metal elements include two or more selected from the group consisting of Ta, Nb, and V.
8. The multielement composite oxide powder according to any one of clauses 1 to 7, wherein the oxide particle includes 20 or more and 70 or more of the polygonal tunnels per 5 nm × 5 nm area within a region excluding a peripheral portion of 1 nm width from an outer periphery in a plane intersecting the major axis direction.
9. The multielement composite oxide powder according to any one of clauses 1 to 8, wherein the composite oxide has a columnar crystal structure grown in the major axis direction.
10. The multielement composite oxide powder according to any one of clauses 1 to 9, wherein an aspect ratio of the major axis to the minor axis is 2 or more and 50 or less.
11. The multielement composite oxide powder according to any one of clauses 1 to 10, wherein the hexavalent metal elements include W and Mo, and a ratio A_{W}/A_{Mo} of a W element content A_{W} to a Mo element content A_{Mo} is 0.5 ≤ A_{W}/A_{Mo} ≤ 2.5.
12. The multielement composite oxide powder according to any one of clauses 1 to 11, wherein the composite oxide is represented by a general formula WₐMo_{b}AₓTi_{y}O_{z}, where in the general formula, A is two or more selected from the group consisting of V, Ta, and Nb, 0.5 ≤ a/b ≤ 2.5, 0.4 ≤ a+b ≤ 0.9, 0.09 ≤ x ≤ 0.6, 0 ≤ y ≤ 0.3, 2 ≤ z ≤ 3, and a+b+x+y = 1.
13. An electrochemical device comprising the multielement composite oxide powder according to any one of clauses 1 to 12 as an electrochemically functional material.
14. A catalyst comprising the multielement composite oxide powder according to any one of clauses 1 to 12.
15. A multielement composite oxide powder production method for producing the multielement composite oxide powder according to any one of clauses 1 to 12, the method comprising:
   mixing oxides of the constituent metal elements to obtain a mixed powder;
   performing plasma treatment on the mixed powder;
   extracting a stable phase after the plasma treatment; and
   heat-treating the stable phase in an oxygen-containing atmosphere to obtain the composite oxide.
16. The multielement composite oxide powder production method according to clause 15, wherein a mixed gas of N₂ and O₂ or a mixed gas of Ar and O₂ is used as a carrier gas in the plasma treatment.
17. The multielement composite oxide powder production method according to clause 15 or 16, wherein the extracting the stable phase includes removing coarse particles having a particle size of 1 µm or more by sieving or cyclone treatment.

### REFERENCE SIGNS LIST

1... oxide particle, 2... lateral surface, 3... plane, 3a... area, 3b... peripheral portion, 4... tetragonal tunnel, 5... pentagonal tunnel, 6... hexagonal tunnel, 8... layer, 9... metal atom, 10... electric storage device, 11... negative electrode-side electrode layer, 12... negative electrode layer, 13... separator layer, 14... positive electrode layer, 15... positive electrode-side electrode layer, 20... electrochromic device, 21... first electrode, 22... electrochromic layer, 23... electrolyte layer, 24... counter electrode, 25... second electrode, 26... first substrate, 27... second substrate

## Claims

1. A multielement composite oxide powder comprising an oxide particle including a composite oxide, the composite oxide containing:
constituent metal elements containing two or more hexavalent metal elements and two or more pentavalent metal elements at a content of 80 atm% or more in total; and
oxygen,
the oxide particle having a major axis and a minor axis intersecting the major axis, and having a polygonal tunnel structure including one or more polygonal tunnels of five or more vertices in a major axis direction along the major axis.

2. The multielement composite oxide powder according to claim 1, wherein the constituent metal elements contain the hexavalent metal elements and the pentavalent metal elements at a content of 90 atm% or more in total.

3. The multielement composite oxide powder according to claim 1 or 2, wherein the constituent metal elements contain the hexavalent metal elements at a content of 40 atm% or more and 90 atm% or less.

4. The multielement composite oxide powder according to claim 3, wherein the constituent metal elements contain the pentavalent metal elements at a content of 9 atm% or more and 40 atm% or less.

5. The multielement composite oxide powder according to claim 4, wherein the constituent metal elements further contain one or more tetravalent metal elements at a content of 1 atm% or more.

6. The multielement composite oxide powder according to claim 3, wherein the hexavalent metal elements include two or more selected from the group consisting of W, Mo, Cr, Re, and Mn.

7. The multielement composite oxide powder according to claim 4, wherein the pentavalent metal elements include two or more selected from the group consisting of Ta, Nb, and V.

8. The multielement composite oxide powder according to claim 1 or 2, wherein the oxide particle includes 20 or more and 70 or more of the polygonal tunnels per 5 nm × 5 nm area within a region excluding a peripheral portion of 1 nm width from an outer periphery in a plane intersecting the major axis direction.

9. The multielement composite oxide powder according to claim 1 or 2, wherein the composite oxide has a columnar crystal structure grown in the major axis direction.

10. The multielement composite oxide powder according to claim 1 or 2, wherein an aspect ratio of the major axis to the minor axis is 2 or more and 50 or less.

11. The multielement composite oxide powder according to claim 1 or 2, wherein the hexavalent metal elements include W and Mo, and a ratio A_{W}/A_{Mo} of a W element content A_{W} to a Mo element content A_{Mo} is 0.5 ≤ A_{W}/A_{Mo} ≤ 2.5.

12. The multielement composite oxide powder according to claim 1 or 2, wherein the composite oxide is represented by a general formula WₐMo_{b}AₓTi_{y}O_{z}, where in the general formula, A is two or more selected from the group consisting of V, Ta, and Nb, 0.5 ≤ a/b ≤ 2.5, 0.4 ≤ a+b ≤ 0.9, 0.09 ≤ x ≤ 0.6, 0 ≤ y ≤ 0.3, 2 ≤ z ≤ 3, and a+b+x+y = 1.

13. The multielement composite oxide powder according to claim 1 or 2, wherein: the composite oxide is represented by a general formula WₐMo_{b}AₓTi_{y}O_{z}, where in the general formula, A is two or more selected from the group consisting of V, Ta, and Nb, 0.5 ≤ a/b ≤ 2.5, 0.4 ≤ a+b ≤ 0.9, 0.09 ≤ x ≤ 0.6, 0 ≤ y ≤ 0.3, 2 ≤ z ≤ 3, and a+b+x+y = 1; and an aspect ratio of the major axis to the minor axis is 2 or more and 50 or less.

14. The multielement composite oxide powder according to claim 1 or 2, wherein: the hexavalent metal elements include W and Mo; a ratio A_{W}/A_{Mo} of a W element content A_{W} to a Mo element content A_{Mo} is 0.5 ≤ A_{W}/A_{Mo} ≤ 2.5; the composite oxide is represented by a general formula WₐMo_{b}AₓTi_{y}O_{z}, where in the general formula, A is two or more selected from the group consisting of V, Ta, and Nb, 0.5 ≤ a/b ≤ 2.5, 0.4 ≤ a+b ≤ 0.9, 0.09 ≤ x ≤ 0.6, 0 ≤ y ≤ 0.3, 2 ≤ z ≤ 3, and a+b+x+y = 1; the oxide particles include 20 or more and 70 or more of the polygonal tunnels per 5 nm × 5 nm area in a region excluding a peripheral portion of 1 nm width from an outer periphery in a plane intersecting the major axis direction; and an aspect ratio of the major axis to the minor axis is 2 or more and 50 or less.

15. An electrochemical device comprising the multielement composite oxide powder according to claim 1 or 2 as an electrochemically functional material.

16. A catalyst comprising the multielement composite oxide powder according to claim 1 or 2.

17. A multielement composite oxide powder production method for producing the multielement composite oxide powder according to claim 1 or 2, the method comprising:
mixing oxides of the constituent metal elements to obtain a mixed powder;
performing plasma treatment on the mixed powder;
extracting a stable phase after the plasma treatment; and
heat-treating the stable phase in an oxygen-containing atmosphere to obtain the composite oxide.

18. The multielement composite oxide powder production method according to claim 17, wherein a mixed gas of N₂ and O₂ or a mixed gas of Ar and O₂ is used as a carrier gas in the plasma treatment.

19. The multielement composite oxide powder production method according to claim 17, wherein the extracting the stable phase includes removing coarse particles having a particle size of 1 um or more by sieving or cyclone treatment.
